(19) **Europäisches Patentamt**
**European Patent Office**
**Office européen des brevets**

(11) **EP 1 611 760 B1**

(12) **EUROPEAN PATENT SPECIFICATION**

(45) Date of publication and mention
of the grant of the patent:
**17.04.2013 Bulletin 2013/16**

(51) Int Cl.:
***H04W 74/08*** (2009.01)

(21) Application number: **04719465.9**

(86) International application number:
**PCT/EP2004/050296**

(22) Date of filing: **11.03.2004**

(87) International publication number:
**WO 2004/086797 (07.10.2004 Gazette 2004/41)**

(54) **METHOD FOR SHARING ACCESS TO A RESOURCE OF A MOBILE COMMUNICATION SYSTEM AND SYSTEM AND APPARATUS FOR USE THEREIN**

VERFAHREN ZUM GEMEINSAMEN ZUGRIFF AUF EINE RESOURCE EINES MOBILKOMMUNIKATIONSSYSTEMS UND SYSTEM UND VORRICHTUNG ZUM GEBRAUCH DES VERFAHRENS

PROCEDE PERMETTANT DE PARTAGER L'ACCES A UNE RESSOURCE DANS UN SYSTEME DE COMMUNICATION MOBILE ET SYSTEMES ET APPAREIL DESTINES A ETRE UTILISES DANS LEDIT SYSTEME

(84) Designated Contracting States:
**AT BE BG CH CY CZ DE DK EE ES FI FR GB GR HU IE IT LI LU MC NL PL PT RO SE SI SK TR**

(30) Priority: **28.03.2003 GB 0307157**

(43) Date of publication of application:
**04.01.2006 Bulletin 2006/01**

(73) Proprietor: **Motorola Solutions Israel Limited**
**70199 Airport City (IL)**

(72) Inventors:
• **SERFATY, Salomon,**
**Motorola Israel Limited**
**67899 Tel Aviv (IL)**

• **SHAHAF, Mark,**
**Motorola Israel Limited**
**67899 Tel Aviv (IL)**

(74) Representative: **Treleven, Colin et al**
**Optimus Patents Limited**
**Grove House**
**Lutyens Close**
**Basingstoke**
**Hampshire, RG24 8AG (GB)**

(56) References cited:
**GB-A- 2 364 219       US-A- 5 729 542**
**US-A1- 2002 034 967     US-A1- 2002 141 435**

Printed by Jouve, 75001 PARIS (FR)

**Description**

**FIELD OF THE INVENTION**

The present invention.relates to mobile communication methods, systems and apparatus, particularly infrastructure apparatus and mobile stations, for use therein.

**BACKGROUND OF THE INVENTION**

Mobile wireless communication systems, for example cellular telephony or private mobile radio communication systems, typically provide for radio telecommunication links.to be arranged between a system infrastructure including a plurality of base transceiver stations (BTSs) and a plurality of user or subscriber units or terminals, often termed mobile stations (MSs).

Methods for communicating information simultaneously in a wireless communication network exist where communication resources are shared by a number of users. Such methods are termed multiple access techniques. A number of multiple access techniques exist, whereby a finite communication resource is divided into any number of physical parameter. Of particular interest herein is TDMA (time division multiple access), a procedure whereby each communication resource, say a communication channel on a particular frequency used in the communication system, is shared amongst users by dividing the resource into a number of distinct time periods (time-slots, frames; etc).

Within such multiple access techniques; different duplex (two-way communication) paths are arranged. Such paths.can be arranged in a frequency division duplex (FDD) configuration, whereby a frequency is dedicated for up-link communication, i.e. from a MS to its serving BTS, and a second frequency is dedicated for downlink communication, i.e. from a serving BTS to one or more MSs. Alternatively, the paths can be arranged in a time division duplex (TDD) configuration, whereby a first time period is dedicated for up-link communication and a. second time period is dedicated for downlink communication.

An example of a zone/cell-based wireless communication system is a TETRA (TErrestrial Trunked Radio) system, which is a system operating according to TETRA standards or protocols as defined by the European Telecommunications Standards Institute (ETSI) - A primary focus for TETRA equipment is use by the emergency services, as TETRA provides dispatch and control services. The system infrastructure in a TETRA system is generally referred to as a switching and management infrastructure (SwMI), which contains substantially all of the communication elements apart from the MSs. This includes base transceiver stations (BTSs) connected to a conventional public-switched telephone network (PSTN) through base station controllers (BSCs) and mobile switching centres (MSCs).

The communication network may provide radio communications between the infrastructure and MSs (or between MSs via the infrastructure) of information in any of the known forms in which such communications are possible. In particular, information may represent speech, sound, data, picture or video information. Data information, is usually digital information representing written words, numbers etc, i.e. the type of user information processed in a personal computer, often referred to in relation to communication in a network as 'text' information or 'packet data'. In addition, control signalling messages are communicated. These are messages relating to the communication system itself, e.g. to control the manner in which user information is communicated in compliance with the selected industry protocol such as TETRA. Different channels may be used for communication of the different forms of information.

In TETRA systems and in some other cellular systems, when a user needs to request access to a resource of the system, for example to access a channel to transmit packet data, this request is done using a method known as 'Randon Access Procedure' (RAP). The method is also known as Reservation ALOHA. In this procedure, the user's MS sends a request message to the infrastructure indicating the resource, e.g. capacity in a particular communication channel such as for packet data communication, to which access is required. The infrastructure may grant the request in whole or in part by reserving all or some of the capacity requested.

TETRA systems use TDMA operating protocols. In such protocols, some slots in the timing procedure of the control signalling channel may be reserved for the RAP requests or such slots may be allocated by the system infrastructure on a dynamic basis. The infrastructure informs the MSs of users through its downlink transmission that the next say N slots are to be devoted to the RAP. These slots are available for the MSs which require access to a system resource to have opportunities to request the infrastructure to allow or reserve access to the resource. Such a MS uses a Random Access (RA) opportunity in one of the designated slots to make a RAP request. If the request is successful, the infrastructure will reserve or grant access to the appropriate resource to the MS. These RA opportunities are available to all legitimate MSs operating within a given cell. This may include, for example, all MSs within the cell or all MSs in a given user class within the cell as specified by the infrastructure. Collisions may occur in the sending of requests. When this happens, each Ms concerned will not receive any feedback from the infrastructure as to the success of its request and may need to try, after some delay, to repeat the request procedure.

The amount of data needed for a reservation request through a RAP is relatively small (compared with a typical amount of user data sent when a channel becomes available). The MS merely sends a message to the infrastructure including its required capacity requested (say x slots), probably the urgency of the need and not much more. As a result, it is not essential to use a whole time slot for each RAP opportunity in TETRA and some other TDMA based cellular systems. For example, slots may be divided into multiple sub-slots, e.g. two, three or four equal parts, to provide the RA request opportunities. When the infrastructure informs MSs that a particular forthcoming slot may be used for RA requests, the MSs may select any of these sub-slots, in a random fashion, to send their requests for resource access. This lowers the probability of collision by effectively multiplying the number of opportunities which can be made available in a given period of time, e.g. by doubling the number of opportunities where slots are divided into half slots.

In a wide band system such as one suitable for providing TEDS (TETRA Enhanced Data Services) being proposed for TETRA Release 2 standard, a signalling channel having a wide frequency bandwidth may be divided into a number of narrower channels. When a TDMA procedure is used in these divided channel systems, some slots in the TDMA timing frame can be devoted to RA opportunities as noted earlier. Since the main channel has a wide bandwidth and the amount of information to be sent is small, it has been proposed (see for example TIA STANDARD, Wideband Air Interface Scalable Adaptive Modulation (SAM), Physical Layer Specification Public Safety Wideband Data, Standards Project, Digital Radio Technical Standards, TIA-902.BAAB), to use the narrower channels obtained by dividing the main wide channel for the RA opportunities. The MS making a RA request would randomly choose one of the narrower channels.

For example, TIA-902.BAAB referenced above proposes that, when using 150 KHz wide channels, RA requests should be made using three 50 KHz bandwidths within the channels, instead of the full 150 KHz width available in the channels.

By dividing the main channel into three narrower channels of 50 KHz bandwidth in this way, and by having RA opportunities in each of the two half slots making up an entire slot of the TDMA timing structure, the number of opportunities for RA is increased. Using the complete 150 KHz bandwidth available with time slots divided into half slots results in two RA opportunities per slot. Dividing the 150 KHz wide channel into three narrower channels results in three RA opportunities per half slot and six RA opportunities per slot.

One of the problems of this approach is that the narrower divided channels are closely spaced. In a cellular system, adjacent frequency channels are not used in the same cell, in order to avoid the problem of a MS in an adjacent channel close to the BTS masking the reception in the main channel of a MS far from the BTS. This is known in the art as a 'near-far' problem.

In the operating protocol defined in the TETRA standard, it is stipulated that subscriber MSs transmitting in a RA sub-slot (e.g. half slot), should use the maximum power allowed for its class. However, in the frequency divided procedure proposed for the RAP as described earlier, if a MS near to the BTS uses the middle of three adjacent narrow channels for its RA request, most probably any transmission coming from a MS far from the BTS in either of the upper or lower narrow channels will suffer significant interference from the RA request signal sent by that MS.

A possible known solution to deal with this problem is to divide MSs of users (in an overall group permitted to take part in RA opportunities) into a near class and a far class depending on their perceived distance from a given BTS. The perceived distance may be measured by the extent of power loss (attenuation), known in the art as 'path loss' of a signal received at a MS from a given BTS. The MSs can operate to determine themselves whether they are currently in the near class or the far class and act accordingly. One half of the RA sub-slots available could be devoted to MSs in the near class and the other one half could be devoted to MSs in the far class. The BTS may communicate by its downlink control signalling which half slot of a given forthcoming slot is devoted to MSs in the near class and which half slot is devoted to MSs in the far class. In this way, the competition between near and far MSs will be fairer. Unfortunately, especially where MSs are being used in public safety applications, users often tend to be concentrated in given areas causing MSs, when classified into near and far classes as described above, to be concentrated in either the near class or the far class. Possible examples illustrating this situation include: (i) a police station where many MS users work being close to a BTS; and (ii) an incident where a large number of police have gathered being distant from the BTS.

These MS concentrations, in one or other of the MS classes, can unfortunately result in many RA opportunities being wasted as there may be few or no MSs able to take advantage of one half of the RA opportunities available to one of the classes.

US-A-5,729,542 describes a method for accessing a communication system which relies on the use of varying access probabilities for subscribers or messages of varying priority. Thus, the subscribers that are trying to access a communication channel are classified into access classes of different priority.

US 2002/0034967 describes a method of grouping mobile stations positioned close to one another together. The purpose is to operate an adaptive array antenna so as to direct a beam radiated from the antenna toward the group.

SUMMARY OF THE PRESENT INVENTION

According to the present invention, in a first aspect, claim 1 provides a method for sharing access to a resource in a mobile communication system. In accordance with the invention, a method for sharing access by a plurality of mobile stations in the system, comprises the steps of:

a) assigning mobile stations to one of a plurality of location classes;
(b) providing the mobile stations in each location class with random access opportunities to access the resource, the random access opportunities being different for the different location classes;
(c) monitoring the number of random access attempts being made in a given period of time by mobile stations in the different location classes; and
(d) dynamically adjusting the ratio of random access opportunities available to mobile stations in the different location classes using the monitored numbers.

The different location classes (N, F) depend on an apparent distance of mobile stations from a fixed terminal of the system, wherein mobile stations which are determined to be nearer than a given distance from the fixed terminal are classified in a first location class (N) and mobile stations which are further than the given distance from the fixed terminal are classified in a second location class (F).

The invention is particularly suited for use in a system wherein the said resource comprises a data (text or short message service) communication channel but it is also suitable where the resource is another communication channel, e.g. for the communication of one or more signals comprising one or more of system control information, speech information, picture information or video information.

The fixed terminal may comprise a base transceiver, e.g. in a base transceiver station, of the infrastructure of the system.

In the method of the invention, the random access opportunities for each location class may be provided in given slots or sub-slots of a TDMA (time division multiple access) timing procedure, the slots or sub-slots for the different location classes being different.

Alternatively, or in addition/ the random access opportunities may be provided in a plurality of neighbouring frequency bands, e.g. divided from a single allocated wider band.

In the method according to the invention, the given distance may be selected by the system infrastructure. It may be varied by the system infrastructure according to the system conditions. It may be the distance corresponding to a given threshold path loss (attenuation), e.g. measured as described below.

In the method according to the present invention, the random access opportunities for mobile stations may be provided in slots or sub-slots of a TDMA (time division multiple access) timing procedure. Random access opportunities for mobile stations in a first one of the classes may be provided in designated slots or sub-slots, and random access opportunities for mobile stations in a second one of the classes may be provided in other designated slots, the distribution of slots or sub-slots being selected to provide, or adjust toward, the appropriate ratio of random access opportunities available to mobile stations in the different location classes. Where sub-slots, e.g. half slots, are used for the RA opportunities, adjacent sub-slots in a full time slot of the timing procedure, may be used for this purpose.

In the method according to the invention, the mobile stations may be operable to determine their apparent location relative to the fixed terminal and to use the determination to assign themselves to an apparent location class. The determination.may be carried out by a measurement of the received strength of a signal from a fixed terminal of known transmission power received by the mobile stations. This provides a measurement of path loss. Mobile stations receiving a signal having a path loss greater than a predetermined threshold, notified by the infrastructure, are classified as being in the 'far' class. Mobile stations receiving a signal having a path loss less than the predetermined threshold, notified by the infrastructure, are classified as being in the 'near' class. Although in many cases the measurement of path loss will give an accurate measurement of distance from the fixed terminal, the path loss does also depend on signal propagation conditions existing between the fixed terminal and the receiving mobile station so the distance measured in this way is an apparent distance.

Alternatively, another known relative location method may be used, e.g. by use of a GPS receiver associated with the mobile stations, or by use of measured time or time difference of arrival of signals sent between the fixed terminal and the mobile stations.

In the method according to the invention, a signal may be sent by the infrastructure of the system to the mobile stations to indicate one or more forthcoming random access opportunities and which location class of mobile stations is permitted to use the opportunity or opportunities.

In the method according to the invention, the dynamic adjustment of the number of random access opportunities in a given period of time may be carried out in steps. The ratio $RAOR_N$ of the number of random access opportunities RAO in a given period of time for mobile stations in a first class N (e.g. a 'near' class) to the overall number of such opportunities and the ratio $RAOR_F$ of the number of random access opportunities RAO in a given period of time for mobile stations in a second class F (e.g. a 'far' class) to the overall number of such opportunities may be adjusted in accordance with Equations 1 and 2 as follows:

$$RAOR_N(n) = (1-\alpha)RAOR_N(n-1) + \alpha r_N \qquad \text{Equation 1}$$

$$RAOR_F(n) = [1 - RAOR_N(n)] \qquad \text{Equation 2}$$

where n is an integer denoting the number of steps applied to adjust $RAOR_N$ and $RAOR_F$, $\alpha$ is an adaptation constant, where $0 \leq \alpha \leq 1$, and where $r_N$ is the ratio of the measured number of random access attempts by mobile stations in the first location class in a given period of time to access the given resource to the total number of such attempts in that period.

A minimum finite number of random access opportunities may be retained for each location class for a given period of time, even when the measured number of random access attempts by mobile stations in the class in the given period is a number less than the minimum number of slots available.

According to the present invention, in a second aspect, there is provided a mobile communications system comprising an infrastructure and a plurality of mobile stations, the system being operable by the method according to the first aspect.

According to the present invention, in a third aspect, there is provided a system infrastructure apparatus in accordance with claim 15 for use in a mobile communications system. The system infrastructure apparatus includes a base transceiver and a processor operable:

(i) to provide the mobile stations in different location classes with random access opportunities to access the resource, the random access opportunities being different for the different location classes;
(ii) to send a signal to mobile stations of the system to indicate one or more forthcoming random access opportunities and which location class of mobile stations is permitted to use the opportunity or opportunities;
(iii) to monitor the number of random access attempts being made in a given period of time by mobile stations in the different location classes to access the resource of the system; and
(iv) to adjust dynamically the ratio of random access opportunities available to mobile stations in the different location classes to which the stations are assigned.

The different location classes (N, F) are assigned to mobile stations depending on the apparent distance of mobile stations from the base transceiver, wherein mobile stations which are nearer than a given distance from the base transceiver are classified in a first location class (N) and mobile stations which are further than the given distance from the base transceiver are classified in a second location class (F).

The present invention beneficially prevents unnecessary wastage of RA opportunities caused by division of MSs into location classes. The opportunities can be provided mainly to the MSs in the location class which currently most needs them. This is illustrated further in the embodiments described later.

Embodiments of the present invention will now be described by way of example with reference to the accompanying drawings.

## BRIEF DESCRIPTION OF THE ACCOMPANYING DRAWINGS

FIG. 1 is a schematic block diagram of a cellular communication system.
FIG. 2 is a schematic block diagram of a mobile station used in the system shown in FIG. 1.
FIG. 3 is a graph of frequency versus time to illustrate random access opportunities available in both time and frequency space in control signalling in the system shown in FIG.1.
FIG. 4 is a graph showing dynamic changing of the ratio of random access opportunities available to mobile stations in given location classes in the system shown in FIG.1.
FIG. 5 is a graph showing different dynamic changing of the ratio of random access opportunities available to mobile stations in given location classes in the system shown in FIG.1.
FIG.6 is an illustration of a sequence of time slots in a TDMA procedure using two different RA opportunity allocation ratios.to MSs in near and far classes.

## DESCRIPTION OF EMBODIMENTS OF THE INVENTION

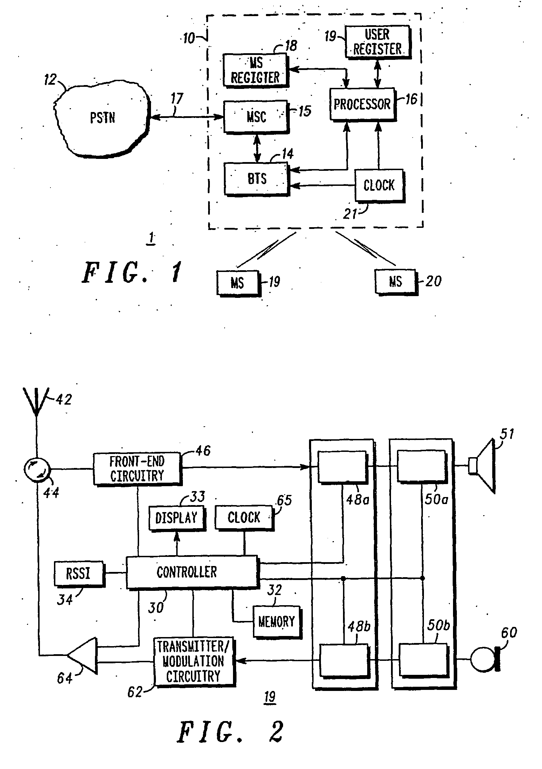

Referring to FIG. 1, there is shown schematically a mobile radio communication system 1 operating in accordance with TETRA standard protocols. The system 1 comprises a SwMI 10 and a plurality of MSs, two of which, MSs 19 and 20, are shown. The MSs 19, 20 in the system 1 can communicate directly with the SwMI 10 and with each other via the SwMI 10. Communications are sent to and received from the MSs 19,20 by a BTS 14 and the control of such communications is by a processor 16. The BTS 14 and the processor 16 are sub-systems within the SwMI 10. Communications from the MSs 19 or 20 can also be sent via the BTS 14 to a MSC (master switch controller) 15 also incorporated in the SwMI 10. The MSC 15 is linked by a direct link (call control connection) 17 to a PSTN (public service telephone network) 12.

The BTS 14 routes calls to the processor 16 or to the MSC 15 depending on whether the call is directed to another MS in the system 1 or to a target terminal (not shown) to be reached via the PSTN 12. The SwMI 10 incorporates a MS register 18. This is operably coupled to the processor 16 and stores records of information about the location of MSs in the systems 1 in a known manner.

Referring now to FIG. 2, a block diagram of the MS 19 is shown. This illustrates the construction ad operation of the MSs being used in the system 1. Operation of functions within the MS 19 are controlled by a controller 30, which generally comprises a suitably programmed digital signal processor. The controller 30 may also control the information flow and operational state of processors within the MS 19.

Information relevant to operation of the MS 19 is stored in a memory 32 associated with the controller 30. For example, operational software programs to be used by the controller 30 and layer 2 ID address information to be used in communications sent by the MS 19 is stored in the memory 32.

The MS 19 has a receiver chain and a transmitter chain and includes an antenna 42 coupled to a duplex filter or circulator 44 that provides isolation between receiver and transmitter chains within the MS 19. The receiver chain includes a receiver front-end circuitry 46 (effectively providing reception, filtering and intermediate or baseband frequency conversion of incoming communications). The front-end circuitry 46 receives radio communications from another terminal, such as another MS, e.g. the MS 20 (FIG. 1). The front-end circuitry 46 is serially coupled to a signal processor (generally realised by a digital signal processor, DSP) 48a coupled to the controller 30. The signal processor 48a performs signal demodulation; error correction and formatting, and recovers end-to-end encrypted information from the received signal.

A signal representing the information recovered by the signal processor 48a is serially coupled to a baseband processing device 50a, which takes the information received from the processor 48a and formats it in a suitable manner to send to an output device 51, such as a speaker. Received or other information may also be displayed on an electro-optical display 33 coupled to the controller 30 (via display driver circuits -not shown).

The functions of the controller 30, the signal processor 48a and the baseband processor 50a although shown as separate in FIG. 2 may be implemented within the same physical microprocessor device.

The transmitter chain of the MS 19 essentially includes an input device 60, such as a microphone, coupled in series through a baseband processor 50b, a signal processor 48b, transmitter/modulation circuitry 62 and a power amplifier 64. The processor 48b, transmitter/modulation circuitry 62 and the power amplifier 64 are operationally responsive to the controller 30. An output from the power amplifier 64 is supplied to the duplex filter or circulator 44, as known in the art. The transmit chain in the MS 19 takes the baseband signal from input device 60 and delivers it to the signal processor 48b where it is encoded for transmission by the transmit/modulation circuitry 62 and power amplifier 64.

The signal processor 48b in the transmit chain may be implemented in a device distinct from the processor 48a in the receiver chain. Alternatively, a single processor may be used to implement processing of both transmit and receive signals, as shown in FIG. 2. Similarly, the baseband processor 50a and the baseband processor 50b may be separate devices or may be combined in a single device as shown in FIG. 2.

Of course, the various components within the MS 19 can be realised in discrete or integrated component form, with an ultimate structure therefore being a suitable design selection from these forms.

In use of the system 1 shown in FIG.1 including MSs such as the MS 19 of FIG. 2, the SWMI 10 and MSs 19, 20 etc operate according to TETRA protocols using a synchronised TDMA timing procdure controlled by the processor 16 using the clock 21 for synchronisation. Time is divided into four slots per frame and 18 frames per multiframe (1 second) . Using this protocol, system control communications are sent between the SwMI 10 (via the BTS 14) and the MSs 19, 20 etc. Such communications include messages relating to RA opportunities. The processor 16 defines certain slots at specified positions in the slot and frame structure of the TDMA structure in which such opportunities are to be available, e.g. in order for MSs to make a request to access a data communication channel. According to the procedure described earlier, the MSs are classified according to their current apparent location relative to the BTS 14 into two location classes, namely MSs in a 'near' class and MSs in a 'far' class, depending whether the MSs are apparently nearer or further than a given distance from the BTS 14. The given distance is specified by the processor 16 and transmitted by the BTS 14. It is stored in the memory 32 of the MSs. The RA opportunities for MSs in the 'near' class are provided in given half-slots of the TDMA timing procedure, and the random access opportunities for MSs in the 'far' class are provided in sub-slots of the TDMA procedure adjacent to those for the 'near' class and in the same slots as those for the 'near' class. Thus, the half-slots may be adjacent half-slots in a full time slot.

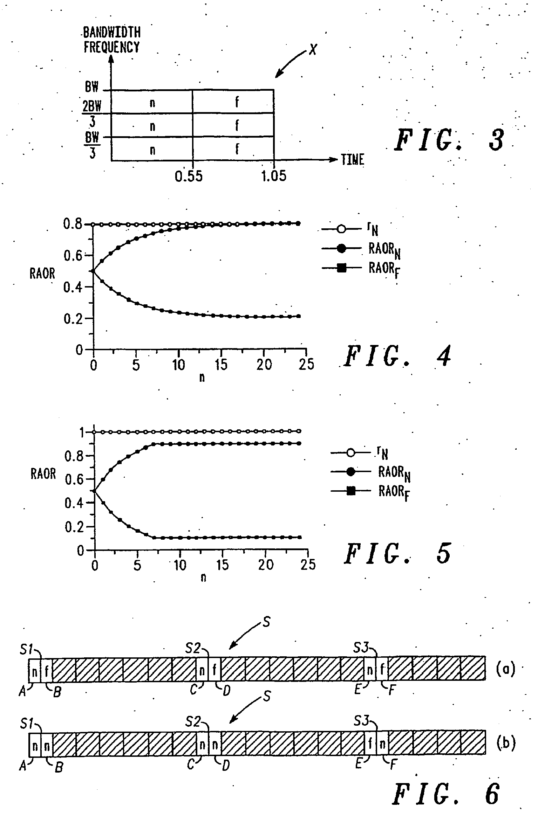

This is illustrated in FIG. 3 which shows a slot X in both time and frequency space. The slot X is divided in time into two half slots in which RA opportunities are provided. Along the time axis these half slots extend from a time 0 to a time 0.5s and from the time s to a time 1.0s, where 1.0s is the length in time space of the slot X. The control channel in which the RA request messages may be sent has a bandwidth BW which is equally divided into three narrower channels in each of which there are are RA opportunities. The channels extend in frequency bandwidth from 0 to BW/3, from BW/3 to 2BW/3 and from 2BW/3 to BW respectively, where BW is the overall channel bandwidth. Thus overall, in the slot X there are six RA opportunities as indicated by six boxes labelled n and f. Opportunities for MSs in the 'near' class are denoted by boxes labelled n, and opportunities for MSs in the 'far' class are denoted by boxes labelled f.

The MSs 19, 20 etc are operable to determine their own apparent location relative to the BTS 14 and to use the determination to assign themselves to a location class. The determination is carried out by measuring the path loss of a signal sent in control signalling from the BTS 14 and received by the MS. The BTS 14 sends in a broadcast signal the value of the power with which it transmits the signal. This value is received by the processor 48a of each MS and stormed in the memory 32 of each MS. The processor 48a also measures the power of the received signal. The MS can use this together with the stored value of the power of transmission at the BTS 14 to calculate the path loss by the controller 30. The calculated value of path loss is compared by the controller 30 with a threshold value previously communicated from the processor 16 by the BTS 14 and stored in the memory 32. The controller 30 classifies the MS into either a ·near' class or a 'far' class depending on whether the measured path loss is respectively less than or greater than the threshold value.

A procedure for dynamically assigning the RA opportunities to the MSs in the system 1 shown in FIG. 1 will now be described The main points of the procedure are as follows:

1. When the number of MSs in the 'near' class is large with respect to the number of MSs in the 'far' class, the number of RA opportunities for MSs in the 'near' class is increase, and vice versa.

2. The BTS 14 communicate through its downlink control channel what RA opportunities are becoming available and which class of MSs (near or far) can use these forthcoming RA opportunities.

Even if all of the MSs are in say the 'near' class, not all of the RA opportunities are devoted to them. In other worlds, a minimal fraction of RA opportunities for MSs in the 'far' class is retained. Similarly, if all of the MSs are in the 'near' class, not all of the RA opportunities are devoted to them. A minimal fraction of RA opportunities for MS in 'the 'near' class is retained.

One way of carrying out this procedure is as follows:

1. Initially the processor 16 assigns slots to be used for RA opportunities and assigns sub-slots (half slots) within these slots. 50% of the sub-slots are to be opportunities for MSs in the 'near' class and the other 50% for MSs in the 'far' class. We denote $RAOR_N$ as the ratio per unit time of RA opportunities for MSs in the near class to the overall number of RA opportunities and $RAOR_F$ as the ratio of random access opportunities for MSs in the far class to the overall number of RA opportunities. Initially,

$$RAOR_N = RAOR_F = 0.5.$$

2. The professor 16 counts continuously the number of RA requests (attempts) in the RA opportunities in a sub-slot devoted to the 'near' MSs and the number of RA requests in the RA opportunities in a sub-slot devoted to the 'far' MSs. This counting can be done by the processor 16 using a measure of the received signal strength in the corresponding sub-slot. In this way, even when collisions in the sub-slot are present, they can be counted by the processor 16 and there is no need to decode the message to perform a count.

3. The BS performs a windowed average of the number of requests measured for each MS class by averaging say over the last n RA opportunities, where n is a pre-defined integer. We denote RAF as the average (over the used window) of RA requests from MSs in the 'far' class and RAN as the average of RA requests for MSs in the 'near' class.

4. We define $r_F = RAF/(RAF+RAN)$ which is the ratio of the number of requests from MSs in the 'far' class to the total number of such requests. Similarly, we define $r_N = RAN/(RAF+RAN)$ as the ratio of the number of requests for users in the 'near' class to the total number of such requests. The sum $r_F + r_N = 1$.

5. The processor 16 then dynamically changes $RAOR_F$ and $RAOR_F$ in the manner defined by the following equations:

a. $RAOR_N(n) = (1-\alpha)RAOR_N(n-1) + \alpha\ r_N$

b. $RAOR_N(n) = \max [RAOR_N(n)\ ,\ RAOR_{N,min}]$

c. $RAOR_N(n) = \min [RAOR_N(n)\ ,\ RAOR_{N,max}]$

where

- a is an adaptation constant, $0 \leq \alpha \leq 1$;
- $RAOR_{N, \, min}$ is the minimum ratio of RA opportunities devoted to MSs in the 'near' class;
- $RAOR_{N,max}$ is the maximum ratio of RA opportunities devoted to MSs in the 'near' class
- n is the number of steps over which the change of ratios is to be carried out; it may be the same measuring window referred to above for $r_N$. min $(RAOR_N \, (n) \, , \, RAOR_{N,max})$ is equal to the minimum of the two variables $RAOR_N(n)$ and $RAOR_{N,max}$
- max $(RAOR_N \, (n) \, , \, RAOR_{N,min})$ is equal to the maximum of the two variables $RAOR_N(n)$ and $RAOR_{N,min}$

d. $RAOR_F(n) \; = \; [1 \; - \; RAOR_N(n)]$

Examples 1 and 2 as follows illustrate the effect of using this procedure.

Example 1.

Assume that the measured average value of $r_N$ over successive measurement periods is equal to 0.8. Assume also that the processor 16 sets the following values for use in the dynamic adjustment procedure : $\alpha$ = 0.2, $RAOR_{N,min}$ = 0.1 and $RAOR_{N,max}$ = 0.9. The results for this example are shown graphically in FIG.4. We see from FIG.4 that the allowed ratio of opportunities $RAOR_N$ converges in steps to the actual measured value $r_N$, while the allowed ratio $RAOR_F$ converges in steps to its complement (the value to give with $R_N$ a sum of 1) .

Example 2.

In a second example, with the same parameter values as in Example 1 but with $r_N$ changed to 1, the results obtained are as shown in FIG.5. We see from FIG. 5 that $RAOR_N$ converges in steps to $RAOR_{N,max}$ and $RAOR_F$ converges in steps to $RAOR_F,min$, leaving opportunities for MSs\mss in the 'far' class still to have some RA opportunities.
Overall, we see from FIGs. 4 and 5 that the RA. opportunities are provided to the MS class for which they are most needed, but still leaving some RA opportunities available for MSs which might appear in the other class.
FIG. 6 illustrates the effect of using an adjustment of RA opportunities using an embodiment of the invention. In the upper part of FIG 6, viz FIG 6(a), a sequence of slots S is shown. Included in the slots S are slots S1, S2 and S3 which have been selected for RA opportunities. The slots S1, S2 and S3 are equally spaced with six slots S which do not provide RA opportunities spaced between each pair of them. Each of the slots S1, S2 and S3 is subdivided into two half slots. Thus slot S1 is subdivided into half slots A and B, slot 52 is subdivided into half slots C and D, and slot S3 is subdivided into half slots E and F. In FIG 6(a) the RA opportunities for 'near' MSs are in the half slots A, C and E and these half slots are thus labelled 'n'. The RA opportunities for 'far' MSs are in the half slots B, D and F and are labelled 'f'. Thus, there are equal numbers of RA opportunities for 'near' and 'far' MSs. Thus $RAOR_N$ is 0.5.
In the lower part of FIG. 6, viz FIG. 6(b), the same sequence of slots S is shown with the RA opportunity slots S1, S2 and S3 divided to give six half.slots A to F. In this case, the ratio $RAOR_N$ has been adjusted in accordance with an embodiment of the invention to be five sixths (0.833). Thus, only one of the six. RA half slots, namely slot E, is designated for RA opportunities for 'far' MSs as indicted by the letter f. The other five RA half slots, namely half slots A, B, C, D and F are designated for RA opportunities for 'near' MSs, as indicated by the letter 'n' .
If the slots S1, S2 and S3 are further divided in terms of bandwidth by proving three narrow channels in conjunction with each slot (in the manner illustrated in FIG. 3) to give eighteen RA opportunities, the ratio $RAOR_N$ = five sixths may be achieved by designating for RA opportunities for 'far' MSs three half slots from the half slots A to F but using each in conjunction with a different one of the three narrow channels obtained by dividing the channel bandwidth into three, the remaining half slots in the three narrow channels being for 'near' MSs. Alternatively, a different set of three of the eighteen RA opportunities may be designated for 'far' MSs whilst the other fifteen. RA opportunities are designated for 'near' MSs.

**Claims**

1. A method for sharing access to a resource in a mobile communication system (1) by a plurality of mobile stations (19, 20) in the system, comprising the steps of

    (a) assigning mobile stations to one of a plurality of location classes;
    (b) providing the mobile stations in each location class with random access opportunities to access the resource, the random access opportunities being different for the different location classes;
    (c) monitoring the number of random access attempts being made in a given period of time by mobile stations in the different location classes; and

(d) dynamically adjusting the ratio of random access opportunities available to mobile stations in the different location classes using the monitored numbers;

wherein the different location classes (N, F) depend on an apparent distance of mobile stations from a fixed terminal (14) of the system, mobile stations which are determined to be nearer than a given distance from the fixed terminal being classified in a first location class (N), and mobile stations which are further than the given distance from the fixed terminal being classified in a second location class (F).

2. A method according to claim 1, wherein:

the resource comprises a communication channel for the communication of one or more signals comprising one or more of system control information, speech information, text data, picture information or video information.

3. A method according to claim 1 or claim 2, and wherein:

the system includes an infrastructure (10), the fixed terminal comprises a base transceiver (14) of the infrastructure, the steps (a) to (d) are carried out by a processor (16) of the infrastructure and wherein the given distance is specified by the processor (16) and transmitted to mobile stations (19, 20) by the base transceiver.

4. A method according to any one of claims 1 to 3, and wherein:

the random access opportunities for each location class are provided in given slots or sub-slots of a TDMA (time division multiple access) timing procedure, the slots or sub-slots being different for the different location classes.

5. A method according to any one of the preceding claims, and wherein:

the random access opportunities are provided in a plurality of neighbouring frequency bands.

6. A method according to any one of the preceding claims, and wherein:

the random access opportunities for mobile stations (19, 20) in the first location class are provided in designated slots or sub-slots of a TDMA (time division multiple access) timing procedure, and random access opportunities for mobile stations in the second location class are provided in other designated slots or sub-slots of the timing procedure, the distribution of slots or sub-slots being selected to provide, or adjust toward, the appropriate ratio of random access opportunities available to mobile stations in the different location classes.

7. A method according to any one of the preceding claims, and wherein:

the mobile stations (19, 20) are operable to determine their apparent distance from the fixed terminal and to use the determination to assign themselves to a location class (N, F).

8. A method according to claim 7, wherein:

the determination is carried out by a measurement of the path loss of a signal from the fixed terminal (14) received by the mobile stations (19, 20).

9. A method according to any one of the preceding claims, and wherein:

a signal is sent by the infrastructure (10, 14) of the system to the mobile stations (19, 20) to indicate a forthcoming random access opportunity and which location class of mobile stations is permitted to use the opportunity.

10. A method according to any one of the preceding claims, and wherein:

the dynamic adjustment is carried out in steps.

11. A method according to claim 10, and wherein:

the ratio RAOR$_N$ of the number of random access opportunities RAO in a given period of time for mobile stations in the first location class N to the overall number of such opportunities and the ratio RAOR$_F$ of the number of random access opportunities RAO in a given period of time for mobile stations in the second location class F to the overall number of such opportunities are adjusted in accordance with Equations 1 and 2 as follows:

$$RAOR_N(n) = (1—\alpha)\ RAOR_N(n\text{-}l) + \alpha r_N \qquad \text{Equation 1}$$

$$RAOR_F(n) = [1— RAOR_N(n)] \qquad \text{Equation 2}$$

where n is an integer denoting the number of steps applied to adjust RAOR$_N$ and RAOR$_F$, $\alpha$ is an adaptation constant, where $0 \leq \alpha \leq 1$, and where r$_N$ is the ratio of the measured number of random access attempts by mobile stations in the first location class in a given period of time to access the given resource to the total number of such attempts in that period.

**12.** A method according to any one of the preceding claims, and wherein:

a minimum finite number of random access opportunities is retained for each location class for a given period of time, even when the measured number of random access attempts by mobile stations (19, 20) in the location class in the given period is a number less than the minimum number of slots available.

**13.** A method according to any one of the preceding claims, and wherein:

a maximum number of random access opportunities less than the total number available in a given period of time is allowed for each location class.

**14.** A mobile communications system (1) comprising an infrastructure (10) and a plurality of mobile stations (19, 20), the system being operable by the method according to any one of the preceding claims.

**15.** A system infrastructure apparatus (10) for use in a mobile communications system (1), the system infrastructure apparatus including a base transceiver (14) and a processor (16) operable:

a) to provide mobile stations (19, 20) in different location classes with random access opportunities to access the resource, the random access opportunities being different for the different location classes;
b) to send a signal to mobile stations (19, 20) of the system to indicate one or more forthcoming random access opportunities and which location class of mobile stations is permitted to use the opportunity or opportunities;
c) to monitor the number of random access attempts being made in a given period of time by mobile stations in the different location classes to access the resource of the system; and
d) to adjust dynamically the ratio of random access opportunities available to mobile stations (19, 20) in the different location classes to which the mobile stations are assigned;

wherein the different location classes (N, F) are assigned to mobile stations (19, 20) depending on the apparent distance of mobile stations from the base transceiver (14), mobile stations which are nearer than a given distance from the base transceiver (14) being classified in a first location class (N), and mobile stations which are further than the given distance from the base transceiver (14) being classified in a second location class (F).

**Patentansprüche**

**1.** Verfahren für eine Zugangsfreigabe an eine Ressource in einem mobilen Kommunikationssystem (1) durch eine Vielzahl von Mobilstationen (19, 20) in dem System, umfassend die Schritte:

(a) Zuordnen von Mobilstationen zu einer aus einer Vielzahl von Ortsklassen;
(b) Bereitstellen der Mobilstationen in jeder der Ortsklassen mit zufälligen Zugangsmöglichkeiten um auf die Ressource zu zugreifen, wobei die zufälligen Zugangsmöglichkeiten unterschiedlich für die verschiedenen Ortsklassen sind;

(c) Überwachen der Anzahl von zufälligen Zugriffsversuchen, die in einer vorgegebenen Zeitdauer durch die Mobilstationen in den verschiedenen Ortsklassen gemacht werden; und

(d) dynamisches Anpassen des Verhältnisses von zufälligen Zugriffsmöglichkeiten, die den Mobilstationen in den unterschiedlichen Ortsklassen zur Verfügung stehen, durch Verwendung der überwachten Anzahl;

wobei die unterschiedlichen Ortsklassen (N, F) von einer ersichtlichen Distanz der Mobilstationen von einem fixierten Terminal (14) des Systems abhängig sind, wobei Mobilstationen, die näher als einer vorgegebenen Distanz von dem fixierten Terminal gelegen zu sein ermittelt werden, in eine erste Ortsklasse (N) eingestuft werden, und wobei Mobilstationen, die weiter als eine vorgegebene Distanz von dem fixierten Terminal entfernt sind, in eine zweite Ortsklasse (S) eingestuft werden.

2. Verfahren nach Anspruch 1, wobei:

die Ressource einen Kommunikationskanal zur Kommunikation mit einem oder mehreren Signalen, die eines oder mehrere von Systemkontrollinformation, Sprachinformation, Textdaten, Bildinformation oder Videoinformation umfassen, umfasst.

3. Verfahren nach Anspruch 1 oder 2, und wobei:

das System eine Infrastruktur (10) beinhaltet, wobei das fixierte Terminal einen Basissender (14) der Infrastruktur umfasst, wobei die Schritte (a) bis (d) durch einen Prozessor (16) der Infrastruktur ausgeführt werden, und wobei die vorgegebene Distanz durch den Prozessor (16) ermittelt ist und an die Mobilstationen (19, 20) durch den Basissender übermittelt wird.

4. Verfahren nach einem der Ansprüche 1 bis 3, und wobei:

die zufälligen Zugriffsmöglichkeiten für jede der Ortsklassen in vorgegebenen Zeitschlitzen oder Unter-Zeitschlitzen von einer TDMA (Time Division Multiple Access, Zeitmultiplexverfahren) Zeitprozedur zur Verfügung gestellt werden, wobei die Zeitschlitze oder Unter-Zeitschlitze für jede der unterschiedlichen Ortsklassen unterschiedlich sind.

5. Verfahren nach einem der vorangegangenen Ansprüche, und wobei:

die zufälligen Zugriffsmöglichkeiten in einer Vielzahl von benachbarten Frequenzbändern bereitgestellt werden.

6. Verfahren nach einem der vorangegangenen Ansprüche, und wobei:

die zufälligen Zugriffsmöglichkeiten für Mobilstationen (19, 20) in der ersten Ortsklasse in vorgegebenen Zeitschlitzen oder Unter-Zeitschlitzen einer TDMA (Time Division Multiple Access, Zeitmultiplexverfahren) Zeitprozedur zur Verfügung gestellt werden, und wobei die zufälligen Zugriffsmöglichkeiten für Mobilstationen in der zweiten Ortsklasse in anderen vorgegebenen Zeitschlitzen oder Unter-Zeitschlitzen der Zeitprozedur zur Verfügung gestellt werden, wobei die Verteilung der Zeitschlitze oder Unter-Zeitschlitze ausgesucht ist, um das angemessene, den Mobilstation in den verschiedenen Ortsklassen zur Verfügung stehende Verhältnis von zufälligen Zugriffsmöglichkeiten bereit zu stellen oder auf das angemessene Verhältnis von zufälligen Zugriffsmöglichkeiten hin zu justieren.

7. Verfahren nach einem der vorangegangenen Ansprüche, und wobei:

die Mobilstationen (19, 20) betreibbar sind, um ihre ersichtliche Distanz zu dem fixierten Terminal zu ermitteln und um die Ermittlung zu nutzen, um sich selbst einer Ortsklasse (N, F) zuzuordnen.

8. Verfahren nach Anspruch 7, wobei:

die Ermittlung durch eine Messung des Pfadverlusts des durch die Mobilstationen (19, 20) empfangenen Signals des fixierten Terminal (14) ausgeführt wird.

9. Verfahren nach einem der vorangegangenen Ansprüche, und wobei:

ein Signal durch die Infrastruktur (10, 14) des Systems zu den Mobilstationen (19, 20) gesendet wird, um eine bevorstehende zufällige Zugriffsmöglichkeit zu bestimmen und um zu bestimmen welcher Ortsklasse der Mobilstationen erlaubt ist die Möglichkeit zu nutzen.

10. Verfahren nach einem der vorangegangenen Ansprüche, und wobei:

das dynamische Anpassen in Schritten ausgeführt wird.

11. Verfahren nach Anspruch 10, und wobei:

das Verhältnis $RAOR_N$ der Anzahl von zufälligen Zugriffsmöglichkeiten RAO in einer gegebenen Zeitdauer für Mobilstationen in der ersten Ortsklasse zu der Gesamtzahl von solchen Möglichkeiten und das Verhältnis $RAOR_F$ der Anzahl von zufälligen Zugriffsmöglichkeiten RAO in einer vorgegebenen Zeitdauer für Mobilstationen in der zweiten Ortsklasse F zu der Gesamtzahl von solchen Möglichkeiten gemäß den Gleichungen 1 und 2 wie folgt angepasst sind:

$$RAOR_N(n) = (1-\alpha)\,RAOR_N(n-1) + \alpha r_N \qquad \text{Gleichung 1}$$

$$RAOR_F(n) = [1 - RAOR_N(n)] \qquad \text{Gleichung 2}$$

wobei n ein Integer ist, der für die Anzahl an angewandten Schritten zur Anpassung von $RAOR_N$ und $RAOR_F$ steht, wobei $\alpha$ eine Anpassungskonstante ist, wobei $0 \le \alpha \le 1$ gilt, und wobei $r_N$ das Verhältnis der gemessenen Anzahl von zufälligen Zugriffsversuchen durch Mobilstationen in der ersten Ortsklasse in einer vorgegebenen Zeitdauer zum Zugriff der vorgegebenen Ressource zu der Gesamtzahl solcher Versuche in dieser Dauer ist.

12. Verfahren nach einem der vorangegangenen Ansprüche, und wobei:

eine minimale endliche Anzahl von zufälligen Zugriffsmöglichkeiten für jede Ortsklasse für eine vorgegebene Zeitdauer beibehalten ist, selbst wenn die gemessene Zahl von zufälligen Zugriffsversuchen durch Mobilstationen (19, 20) in der Ortsklasse in der vorgegebenen Dauer eine Anzahl kleiner als die minimale Anzahl von zur Verfügung Schlitzen ist.

13. Verfahren nach einem der vorangegangenen Ansprüche, und wobei:

eine maximale Anzahl von zufälligen Zugriffsmöglichkeiten, die kleiner als die zur Verfügung stehende Gesamtzahl in einer vorgegebenen Zeitdauer ist, für jede Ortsklasse erlaubt ist.

14. Mobiles Kommunikationssystem (1), umfassend eine Infrastruktur (10) und eine Vielzahl von Mobilstationen (19, 20), wobei das System durch ein Verfahren nach einem der vorangegangenen Ansprüche betrieben wird.

15. Systeminfrastrukturvorrichtung (10) zur Verwendung in einem mobilen Kommunikationssystem (1), wobei die Systeminfrastrukturvorrichtung beinhaltend einen Basissender (14) und einen Prozessor (16) betreibbar ist:

a) um Mobilstationen (19, 20) in unterschiedlichen Ortsklassen mit zufälligen Zugriffsmöglichkeiten zum Zugriff der Ressourcen bereitzustellen, wobei die zufälligen Zugriffsmöglichkeiten für die unterschiedlichen Ortsklassen verschieden sind;
b) um ein Signal zu Mobilstationen (19, 20) des System zu senden, um eine oder mehrere bevorstehende zufällige Zugriffsmöglichkeit anzuzeigen und um anzuzeigen welcher Ortsklasse von Mobilstationen erlaubt ist die Möglichkeit oder Möglichkeiten zu nutzen;
c) um die Zahl von zufälligen Zugriffsversuchen, die in einer vorgegebenen Zeitdauer durch Mobilstationen in unterschiedlichen Ortsklassen zum Zugriff auf die Ressource des Systems gemacht werden, zu überwachen; und
d) um das Verhältnis von zufälligen Zugriffsmöglichkeiten, die den Mobilstationen (19, 20) in den unterschiedlichen Ortsklassen, denen die Mobilstationen zugewiesen sind, zur Verfügung stehen, dynamisch anzupassen;

wobei die unterschiedlichen Ortsklassen (N, F) in Abhängigkeit von der ersichtlichen Distanz der Mobilstationen von dem Basissender (14) den Mobilstationen zugewiesen sind, wobei die Mobilstationen, die näher als eine vorgegebene Distanz von dem Basissender (14) sind, als zu einer ersten Ortsklasse (N) gehörend klassifiziert werden, und wobei Mobilstationen, die entfernter als eine vorgegebene Distanz zu dem Basissender (14) sind, als zu einer zweiten Ortsklasse (F) gehörend klassifiziert werden.

**Revendications**

1. Procédé de partage de l'accès à une ressource dans un système de communication mobile (1) par une pluralité de stations mobiles (19, 20) du système, comprenant les étapes suivantes :

   (a) assigner des stations mobiles à l'une d'une pluralité de classes de localisation ;
   (b) fournir aux stations mobiles de chaque classe de localisation des opportunités d'accès aléatoire pour accéder à la ressource, les opportunités d'accès aléatoire étant différentes pour les différentes classes de localisation ;
   (c) surveiller le nombre de tentatives d'accès aléatoire effectuées pendant une période de temps donnée par les stations mobiles des différentes classes de localisation ; et
   (d) ajuster dynamiquement le ratio d'opportunités d'accès aléatoire disponibles pour les stations mobiles des différentes classes de localisation à l'aide des nombres surveillés ;

   dans lequel les différentes classes de localisation (N, F) dépendent de la distance apparente des stations mobiles par rapport à un terminal fixe (14) du système, les stations mobiles déterminées comme étant situées à moins d'une distance donnée du terminal fixe étant classifiées dans une première classe de localisation (N), et les stations mobiles situées au-delà de la distance donnée du terminal fixe étant classifiées dans une deuxième classe de localisation (F).

2. Procédé selon la revendication 1, dans lequel :

   la ressource comprend un canal de communication pour la communication d'un ou plusieurs signaux comprenant une ou plusieurs informations parmi des informations de commande système, des informations vocales, des données textes, des informations d'images ou des informations vidéo.

3. Procédé selon la revendication 1 ou la revendication 2, et dans lequel :

   le système comprend une infrastructure (10), le terminal fixe comprend un émetteur-récepteur de base (14) de l'infrastructure, les étapes (a) à (d) sont exécutées par un processeur (16) de l'infrastructure, et dans lequel la distance donnée est spécifiée par le processeur (16) et transmise aux stations mobiles (19, 20) par l'émetteur-récepteur de base.

4. Procédé selon l'une quelconque des revendications 1 à 3, et dans lequel :

   les opportunités d'accès aléatoire pour chaque classe de localisation sont fournies dans des créneaux ou sous-créneaux donnés d'une procédure de synchronisation TDMA (Accès Multiple à Répartition dans le Temps), les créneaux ou sous-créneaux étant différents pour les différentes classes de localisation.

5. Procédé selon l'une quelconque des revendications précédentes, et dans lequel :

   les opportunités d'accès aléatoire sont fournies dans une pluralité de bandes de fréquence voisines.

6. Procédé selon l'une quelconque des revendications précédentes, et dans lequel :

   les opportunités d'accès aléatoire pour les stations mobiles (19, 20) de la première classe de localisation sont fournies dans des créneaux ou sous-créneaux désignés d'une procédure de synchronisation TDMA (Accès Multiple à Répartition dans le Temps), et les opportunités d'accès aléatoire pour les stations mobiles de la deuxième classe de localisation sont fournies dans d'autres créneaux ou sous-créneaux de la procédure de synchronisation, la distribution des créneaux ou sous-créneaux étant sélectionnée de façon à fournir, ou à tendre vers, le ratio approprié d'opportunités d'accès aléatoire disponibles pour les stations mobiles des différentes classes de localisation.

**7.** Procédé selon l'une quelconque des revendications précédentes, et dans lequel :

les stations mobiles (19, 20) sont aptes à déterminer leur distance apparente par rapport au terminal fixe et à utiliser la détermination pour s'assigner elles-mêmes à une classe de localisation (N, F).

**8.** Procédé selon la revendication 7, dans lequel :

la détermination est exécutée par une mesure de l'affaiblissement sur le trajet d'un signal provenant du terminal fixe (14), reçu par les stations mobiles (19, 20).

**9.** Procédé selon l'une quelconque des revendications précédentes, et dans lequel :

un signal est envoyé par l'infrastructure (10, 14) du système aux stations mobiles (19, 20) pour indiquer une opportunité d'accès aléatoire à vernir et quelle classe de localisation de stations mobiles est autorisée à utiliser l'opportunité.

**10.** Procédé selon l'une quelconque des revendications précédentes, et dans lequel :

l'ajustement dynamique est exécuté par étapes.

**11.** Procédé selon la revendication 10, et dans lequel :

le ratio $RAOR_N$ du nombre d'opportunités d'accès aléatoire RAO dans une période de temps donnée pour les stations mobiles de la première classe de localisation N sur le nombre global de ces opportunités et le ratio $ROAR_F$ du nombre d'opportunités d'accès aléatoire RAO dans une période de temps donnée pour les stations mobiles de la deuxième classe de localisation N sur le nombre global de ces opportunités sont ajustés selon les Equations 1 et 2 ci-après :

$$RAOR_N(n) = (1 - \alpha)\, RAOR_N(n - 1) + \alpha r_N \qquad \text{Equation 1}$$

$$RAOR_F(n) = [1 - RAOR_N(n)] \qquad \text{Equation 2}$$

où n est un entier désignant le nombre d'étapes appliquées pour ajuster $RAOR_N$ et $RAOR_F$, $\alpha$ est une constante d'adaptation, où $0 \leq \alpha \leq 1$, et $r_N$ est le ratio du nombre mesuré de tentatives d'accès aléatoire par les stations mobiles de la première classe de localisation dans une période de temps donnée pour accéder à la ressource donnée sur le nombre total de ces tentatives dans cette période.

**12.** Procédé selon l'une quelconque des revendications précédentes, et dans lequel :

un nombre fini minimum d'opportunités d'accès aléatoire est retenu pour chaque classe de localisation pour une période de temps donnée, même lorsque le nombre mesuré de tentatives d'accès aléatoire par des stations mobiles (19, 20) de la classe de localisation dans la période donnée est un nombre inférieur au nombre minimum de créneaux disponibles.

**13.** Procédé selon l'une quelconque des revendications précédentes, et dans lequel :

un nombre maximum d'opportunités d'accès aléatoire inférieur au nombre total disponible dans une période de temps donnée est autorisé pour chaque classe de localisation.

**14.** Système de communication mobile (1) comprenant une infrastructure (10) et une pluralité de stations mobiles (19, 20), le système étant apte à fonctionner selon le procédé selon l'une quelconque des revendications précédentes.

**15.** Appareil d'infrastructure système (10) à utiliser dans un système de communication mobile (1), l'appareil d'infrastructure mobile comprenant un émetteur-récepteur de base (14) et un processeur (16) aptes à :

a) fournir à des stations mobiles (19, 20) de différentes classes de localisation des opportunités d'accès aléatoire pour accéder à la ressource, les opportunités d'accès aléatoire étant différentes pour les différentes classes de localisation ;

b) envoyer un signal aux stations mobiles (19, 20) du système pour indiquer une ou plusieurs opportunités d'accès aléatoire à venir et quelle classe de localisation de stations mobiles est autorisée à utiliser la ou les opportunités ;

(c) surveiller le nombre de tentatives d'accès aléatoire effectuées pendant une période de temps donnée par les stations mobiles des différentes classes de localisation pour accéder à le ressource du système ; et

(d) ajuster dynamiquement le ratio d'opportunités d'accès aléatoire disponibles pour les stations mobiles (19, 20) des différentes classes de localisation auxquelles sont assignées les stations mobiles ;

dans lequel les différentes classes de localisation (N, F) sont assignées aux stations mobiles (19, 20) en fonction de la distance apparente des stations mobiles par rapport à l'émetteur-récepteur de base (14), les stations mobiles situées à moins d'une distance donnée de l'émetteur-récepteur de base (14) étant classifiées dans une première classe de localisation (N), et les stations mobiles situées au-delà de la distance donnée de l'émetteur-récepteur de base (14) étant classifiées dans une deuxième classe de localisation (F).

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5729542 A
- US 20020034967 A